# EUROPÄISCHE PATENTSCHRIFT

(11) **EP 2 022 902 B1**
(45) Veröffentlichungstag und Bekanntmachung des Hinweises auf die Patenterteilung: **05.11.2014**
(21) Anmeldenummer: 08005552.8
(22) Anmeldetag: 25.03.2008
(51) Int. Cl.: E04B 1/82, F16F 1/373

(54) **Winkelverbinder**
Angle connector
Dispositif de liaison d'angle

(30) Priorität: 08.08.2007 AT 12422007
(43) Veröffentlichungstag der Anmeldung: 11.02.2009
(73) Patentinhaber: Getzner Werkstoffe Holding GmbH, 6706 Bürs (AT)
(72) Erfinder: Säly, Lothar, 6706 Bürs (AT); Burtscher, Peter, 6700 Bludenz (AT); Grass, Bertram, 6751 Innerbraz (AT)
(74) Vertreter: Hofmann, Ralf U.

(56) Entgegenhaltungen:
- DE-A1- 3 904 036
- DE-U1- 8 707 806
- DE-U1- 29 718 172
- GB-A- 1 292 452
- GB-A- 2 341 403
- US-A1- 2006 042 874

## Beschreibung

Die vorliegende Erfindung betrifft einen Winkelverbinder gemäß Oberbegriff des Patentanspruchs 1.

Winkelverbinder werden z. B. im Hochbau, insbesondere Holzbau bzw. Gebäudebau, aber auch in anderen Sparten wie z. B. dem Maschinenbau eingesetzt. Beim Stand der Technik wird einer der Schenkel des Winkelverbinders an einem der Bauteile und der andere Schenkel an dem anderen der Bauteile befestigt, was dazu führt, dass die beiden Bauteile in einem durch den Winkelverbinder vorgegebenen Winkel aneinander fixiert sind. Dabei werden die Schenkel - z. B. durch Anschrauben - direkt auf den Bauteilen befestigt, was aber die Übertragung von Körperschall insbesondere in Gebäuden fördert.

Winkelverbinder, wie sie in der DE 87 07 806 U1 und der US 2006/0042874 A1 gezeigt sind, sehen zur Lösung dieses Problems beidseits eines Schenkels des Winkelverbinders Zwischenschichten als Vibrationsdämpfer vor. Die DE 39 04 036 A1 zeigt einen gattungsgemäßen Winkelverbinder.

Aufgabe der Erfindung ist es, einen gattungsgemäßen Winkelverbinder weiter zu entwickeln, um die Gefahr der Übertragung von Schall und Schwingungen abzuschwächen.

Dies wird durch einen Winkelverbinder gemäß des Patentanspruchs 1 erreicht.

Durch die Zwischenschaltung der Zwischenschicht aus einem schalldämmenden und/oder schwingungsisolierenden Material zwischen zumindest einen der Schenkel und eines der Bauteile wird zumindest weitgehend verhindert, dass Körperschall über den Winkelverbinder von einem Bauteil auf das andere Bauteil übertragen wird. Dabei kann vorgesehen sein, dass zwischen beiden Schenkeln und den jeweils daran zu befestigen Bauteilen jeweils eine entsprechende Zwischenschicht vorgesehen ist. In der Regel reicht aber eine Zwischenschicht an einem der Schenkel aus. Unter schalldämmendem und/oder schwingungsisolierendem Material wird allgemein ein Material verstanden, das bessere Eigenschaften bezüglich der Schalldämmung bzw. Schwingungsisolierung aufweist als die Schenkel des Winkelverbinders, welche meist aus Metall, vorzugsweise Stahl, gefertigt sind.

Als schalldämmendes und/oder schwingungsisolierendes Material für die Zwischenschicht wird günstiger Weise ein Elastomer verwendet. Die Zwischenschicht kann dabei vollständig aus diesem Material bestehen, oder auch zusätzliche Materialien aufweisen. Günstigerweise weist die Zwischenschicht einen statischen Elastizitätsmodul zwischen 0,025 N/mm² (Newton pro Quadratmillimeter) und 5 N/mm² bzw. einen dynamischen Elastizitätsmodul zwischen 0,025 N/mm² und 15 N/mm² auf. Günstigerweise wird das Material in einem Pressungsbereich zwischen 0,005 N/mm² und 1 N/mm² eingesetzt. Darüber hinaus ist es günstig, wenn die Zwischenschicht eine minimale Dicke von zumindest 0,4 cm, vorzugsweise von zumindest 0,6 cm, nicht unterschreitet. Bevorzugt liegt die Dicke zwischen 6 mm und 12mm, aber auch jede andere Dicke ist möglich. Besonders bevorzugte Elastomere sind, vorzugsweise aufgeschäumte, Polyurethan-Elastomere, Kautschuk-Elastomere oder auch thermoplastische Elastomere.

Weitere Einzelheiten und Merkmale werden anhand eines erfindungsgemäßen Ausführungsbeispiels erläutert. Dabei zeigen:
Fig. 1 das erfindungsgemäße Ausführungsbeispiel
Fig. 2 das Ausführungsbeispiel aus Fig.1 in Explosionsdarstellung und
Fig. 3 eine typische Einbausituation unter Verwendung des erfindungsgemäßen Ausführungsbeispiels gemäß der Fig. 1 und 2.

Der erfindungsgemäße Winkelverbinder des gezeigten Ausführungsbeispiels weist zwei im Wesentlichen orthogonal zueinander angeordnete Schenkel 1 und 2 auf. Das heißt, zwischen den Schenkeln 1 und 2 liegt ein Winkel 12 von 90° +/- 5°. Dies ist die am häufigsten verwendete Ausführungsform von Winkelverbindern. Sie kommt immer dann zum Einsatz, wenn zwei Bauteile 3 und 4 im Wesentlichen in einem 90° Winkel aneinander befestigt werden sollen. Abweichend von dem gezeigten Ausführungsbeispiel ist aber auch jeder andere, von 0° oder 180° abweichende Winkel 12 zwischen den Schenkeln 1 und 2 möglich, je nachdem in welchem Winkel die Bauteile 3 und 4 aneinander befestigt werden sollen. Bevorzugt ist vorgesehen, dass der jeweilige Winkel 12 fix ist, die beiden Schenkel 1 und 2 also nicht gegeneinander verschwenkbar sind. Abweichend davon ist es aber auch möglich, den erfindungsgemäßen Winkelverbinder mit variablem Winkel zwischen den Schenkeln 1 und 2, z. B. in Form eines Scharniers auszubilden.

Als Befestigungsmittel 6 sind im gezeigten Ausführungsbeispiel Schrauben vorgesehen, mit welchen der Schenkel 1 am Bauteil 4 und der Schenkel 2 am Bauteil 3 befestigt werden kann. Die Schrauben 6 sind durch Befestigungslöcher 7 der Schenkel 2 hindurchgeführt. Der hier in Form eines Schraubenkopfes ausgeführte Stützkopf 11 hat jeweils einen größeren Durchmesser als das Befestigungsloch 7 und sorgt damit für eine sichere Verbindung.

Alternativ zu den hier dargestellten Schrauben könnten natürlich auch andere beim Stand der Technik bekannte Befestigungsmittel, wie Nägel, Nieten, Bolzen, Verklebungen und dgl. verwendet werden.

Zwischen dem Schenkel 1 und dem Bauteil 4 ist die Zwischenschicht 5 aus schalldämmendem und/oder schwingungsisolierendem Material angeordnet. Sie reduziert die Übertragung von Körperschall von einem der Bauteile 3 oder 4 auf das andere der Bauteile 3 oder 4 über den Winkelverbinder. Die Zwischenschicht 5 erstreckt sich im gezeigten Ausführungsbeispiel über die gesamte, in Montagestellung dem Bauteil 4 zugewandte Seite des Schenkels 1. Dies muss nicht zwingend so sein. Günstig ist es jedenfalls, wenn die Zwischenschicht 5 so ausgebildet und am Schenkel 1 angeordnet ist, dass bei Befestigung des Schenkels 1 am Bauteil 4 der Schenkel 1 ausschließlich unter Zwischenschaltung der Zwischenschicht 5 und gegebenenfalls vorhandener Befestigungsmittel 6 mit dem Bauteil 4 in physischem Kontakt steht. Hierdurch wird verhindert, dass Schallbrücken vorhanden sind, über die Körperschall unter Umgehung der Zwischenschicht 5 vom Winkelverbinder auf den Bauteil übertragen werden kann. Günstig ist somit, wenn der Schenkel 1 an keiner Stelle direkt mit dem Bauteil 4 in Kontakt steht. Um dies zu erreichen, kann in Abweichung von dem gezeigten Ausführungsbeispiel auch vorgesehen sein, dass in zumindest einem der Schenkel 1, 2 Befestigungslöcher 7 zum Hindurchführen von Befestigungsmitteln 6, vorzugsweise Schrauben oder Nägeln, vorgesehen sind und die Zwischenschicht 5 zumindest in der Umgebung der Befestigungslöcher 7 angeordnet ist. Die Zwischenschicht 5 ist in diesem Fall als eine Anordnung von schalldämmenden Beilagscheiben ausgebildet. Es können aber auch andere, z. B. gitterförmige oder wabenförmige oder rahmenartige, Strukturen mit entsprechenden schalldämmenden Eigenschaften als Zwischenschicht 5 vorgesehen sein.

Im hier gezeigten Ausführungsbeispiel ist eine Zusatzzwischenschicht 9 vorgesehen, welche zumindest weitgehend verhindert, dass Körperschall über den Winkelverbinder und die Befestigungsmittel 6 zwischen den Bauteilen 3 und 4 übertragen werden kann. Die Zusatzzwischenschicht 9 weist ebenfalls schalldämmendes und/oder schwingungsisolierendes Material auf und kann aus denselben Materialien wie die Zwischenschicht 5 hergestellt sein. Auch sie muss nicht zwingend, wie im hier dargestellten Ausführungsbeispiel vollflächig ausgebildet sein. Auch die Zusatzzwischenschicht 9 muss lediglich verhindern, dass Körperschall zwischen dem Schenkel 1 und den Befestigungseinrichtungen 6 übertragen werden kann. Es sind somit auch als Zusatzzwischenschicht 9 gitter- oder waben- oder rahmen- oder beilagscheibenförmige Strukturen möglich, solange ein direkter Kontakt zwischen den Befestigungsmitteln 6 und dem Schenkel 1 zumindest in dem Umfang vermieden ist, als dass keine wirksame Schallbrücke über die Befestigungsmittel 6 entsteht.

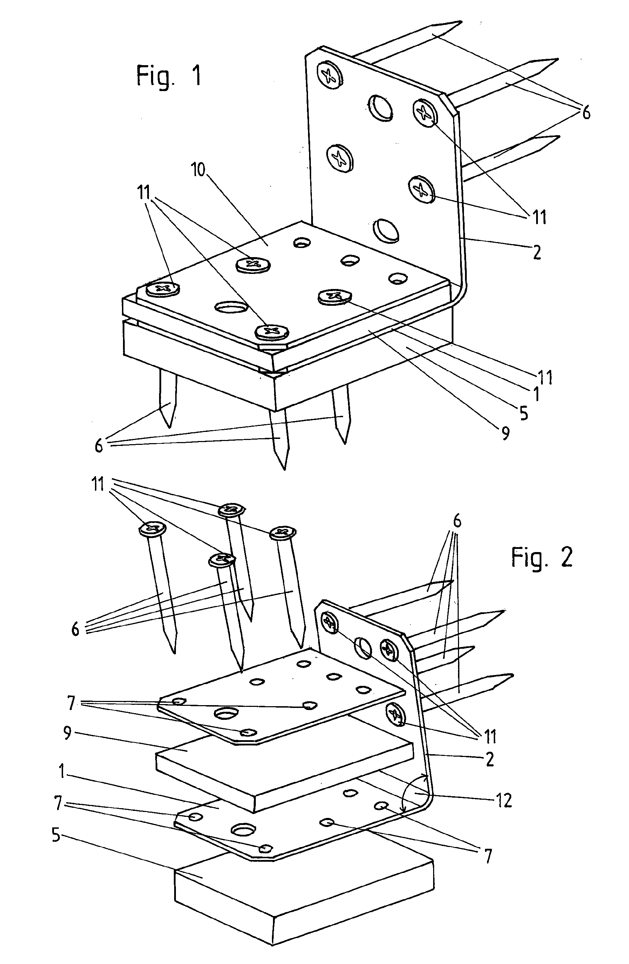

Die Zwischenschicht 5, wie auch die Zusatzzwischenschicht 9 sind günstiger Weise am Schenkel 1 unverlierbar befestigt. Hierfür kann bereits eine Vormontage mit den Schrauben 6, wie in Fig. 1 gezeigt, ausreichen. Es kann aber auch vorgesehen sein, dass der Schenkel 1 an der Zwischenschicht 5 und/oder der Zusatzzwischenschicht 9 angeklebt oder zwischen diesen eingegossen ist. Die Dicke 8 der Zwischenschicht 5 beträgt vorzugsweise mindestens 0,4 cm, besonders bevorzugt mindestens 0,6 cm. Günstigerweise werden Dicken zwischen 6 mm und 12 mm gewählt. Das gleiche gilt für die Dicke 13 der Zusatzzwischenschicht 9, wobei die Dicke 13 üblicherweise kleiner als die Dicke 8 ist.

Um zu verhindern, dass die Stützköpfe 11 der Befestigungsmittel 9 in das relativ weiche Material der Zusatzzwischenschicht 9 eindringen und in diesem nicht entsprechend gehalten sind, ist, wie im Ausführungsbeispiel gezeigt, eine Stützplatte 10 vorgesehen. Diese kann z. B. aus Metall, vorzugsweise Stahl, oder aber auch aus einem entsprechend harten und/oder zähen Kunststoff gefertigt sein. Die in ihr vorgesehenen Befestigungslöcher 7 sind wiederum in ihrem Durchmesser kleiner als die Stützköpfe 11, so dass die Befestigungsmittel 6 im entsprechend versenkten Zustand die Stützplatte 10 gegen die Zusatzzwischenschicht 9 pressen, womit der gesamte Winkelverbinder fest auf dem Bauteil 4 fixiert ist. Die Stützplatte 10 ist im gezeigten Ausführungsbeispiel wiederum einstückig ausgeführt. Dies muss aber nicht zwingend so sein.

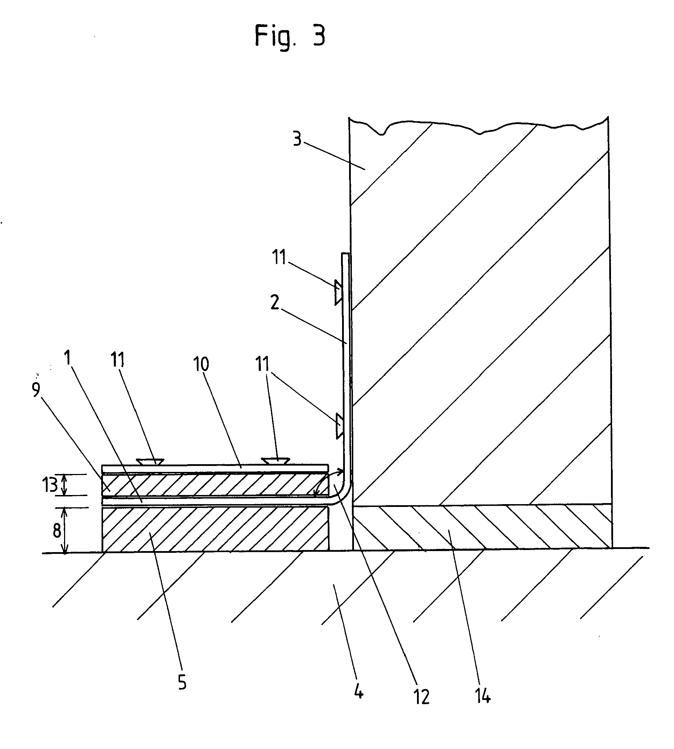

Fig. 3 zeigt eine typische Einbausituation, bei der der Pfosten 3 als erstes Bauteil an einer Bodenplatte 4 als zweitem Bauteil mittels des erfindungsgemäßen Winkelverbinders befestigt ist. Der Schenkel 2 des Winkelverbinders ist dabei direkt über die entsprechenden Befestigungsmittel mit dem ersten Bauteil 3 verbunden. Dieser ruht dabei auf einem Polster 14, welches wiederum zur Abdämmung von Körperschall aus einem entsprechend schalldämmenden und/oder schwingungsisolierenden Material gefertigt ist. Durch dieses Polster 14 wird die direkte Übertragung von Körperschall zwischen den beiden Bauteilen 3 und 4 verhindert.

Um zu vermeiden, dass Körperschall über den Winkelverbinder übertragen wird, ist gemäß des bereits erläuterten erfindungsgemäßen Ausführungsbeispiels die Zwischenschicht 5 vorgesehen. Die Zusatzzwischenschicht 9 verhindert die Übertragung von Körperschall über die Befestigungsmittel 6 mittels derer der Schenkel 1 am Bauteil 4 befestigt ist.

Grundsätzlich ist es möglich, nicht nur einen der beiden Schenkel sondern beide Schenkel 1 und 2 mit einer entsprechenden Zwischenschicht 5 und Zusatzzwischenschicht 9 zu versehen, falls dies in besonderen Einbausituationen zur Vermeidung der Übertragung von Körperschall notwendig erscheinen sollte.

### Legende zu den Hinweisziffern:

- 1: Schenkel
- 2: Schenkel
- 3: Bauteil
- 4: Bauteil
- 5: Zwischenschicht
- 6: Befestigungsmittel
- 7: Befestigungslöcher
- 8: Dicke
- 9: Zusatzzwischenschicht
- 10: Stützplatte
- 11: Stützkopf
- 12: Winkel
- 13: Dicke
- 14: Polster

## Patentansprüche

1. Winkelverbinder mit zumindest zwei in einem von 0° und 180° abweichenden Winkel zueinander angeordneten Schenkeln (1, 2) zum Befestigen eines Bauteils (3) an einem anderen Bauteil (4), wobei an zumindest einem der Schenkel (1) zumindest eine Zwischenschicht (5) aus einem schalldämmenden und/oder schwingungsisolierenden Material angeordnet ist und auf der der Zwischenschicht (5) entgegengesetzten Seite des Schenkels (1) eine Zusatzzwischenschicht (9) aus einem schalldämmenden und/oder schwingungsisolierenden Material in der Weise angeordnet ist, dass Befestigungsmittel (6) zur Befestigung des Schenkels (1) am Bauteil (4) im Wesentlichen ausschließlich über die Zusatzzwischenschicht (9) und die Zwischenschicht (5) mit dem Schenkel (1) in Verbindung stehen, und auf der dem Schenkel (1) entgegengesetzten Seite der Zusatzzwischenschicht (9) eine Stützplatte (10) angeordnet ist, mit welcher Stützköpfe (11) der Befestigungsmittel (6) abstützbar sind und in dem Schenkel (1) Befestigungslöcher (7) zum Hindurchführen von Befestigungsmitteln (6) vorgesehen sind, **dadurch gekennzeichnet, dass** die Zusatzzwischenschicht (9) zumindest in der Umgebung der Befestigungslöcher (7) angeordnet ist.

2. Winkelverbinder nach Anspruch 1, **dadurch gekennzeichnet, dass** das schalldämmende und/oder schwingungsisolierende Material ein elastisches Material ist.

3. Winkelverbinder nach Anspruch 1 oder 2, **dadurch gekennzeichnet, dass** die Schenkel (1, 2) im Wesentlichen orthogonal zueinander angeordnet sind.

4. Winkelverbinder nach einem der Ansprüche 1 bis 3, **dadurch gekennzeichnet, dass** die Zwischenschicht (5) so ausgebildet und am Schenkel (1) angeordnet ist, dass bei Befestigung des Schenkels (1) am Bauteil (4) der Schenkel (1) ausschließlich unter Zwischenschaltung der Zwischenschicht (5) und gegebenenfalls vorhandener Befestigungsmittel (6) mit dem Bauteil (4) in physischem Kontakt steht.

5. Winkelverbinder nach einem der Ansprüche 1 bis 4, **dadurch gekennzeichnet, dass** in zumindest einem der Schenkel (1, 2) Befestigungslöcher (7) zum Hindurchführen von Befestigungsmitteln (6), vorzugsweise Schrauben oder Nägeln, vorgesehen sind.

6. Winkelverbinder nach Anspruch 5, **dadurch gekennzeichnet, dass** die Zwischenschicht (5) zumindest in der Umgebung der Befestigungslöcher (7) angeordnet ist.

7. Winkelverbinder nach einem der Ansprüche 1 bis 6, **dadurch gekennzeichnet, dass** die Zwischenschicht (5) auf der gesamten, in Montagestellung dem Bauteil (4) zugewandten Seite des Schenkels (1) angeordnet ist.

8. Winkelverbinder nach einem der Ansprüche 1 bis 7, **dadurch gekennzeichnet, dass** die Zwischenschicht (5) am Schenkel (1) unverlierbar befestigt, vorzugsweise angeklebt, ist.

9. Winkelverbinder nach einem der Ansprüche 1 bis 8, **dadurch gekennzeichnet, dass** die Schenkel (1, 2) aus Metall, vorzugsweise aus Stahl, gefertigt sind.

10. Winkelverbinder nach einem der Ansprüche 1 bis 9, **dadurch gekennzeichnet, dass** die Zwischenschicht (5) eine minimale Dicke (8) von zumindest 0,4 cm, vorzugsweise von zumindest 0,6 cm, aufweist.

11. Winkelverbinder nach einem der Ansprüche 1 bis 10, **dadurch gekennzeichnet, dass** die Befestigungsmittel (6) Schrauben oder Nägel sind.

12. Winkelverbinder nach einem der Ansprüche 1 bis 11, **dadurch gekennzeichnet, dass** die Zusatzzwischenschicht (9) auf der der gesamten, in Montagestellung dem Bauteil (4) zugewandten Seite des Schenkels (1) gegenüberliegenden Seite des Schenkels (1) angeordnet ist.

13. Winkelverbinder nach einem der Ansprüche 1 bis 12, **dadurch gekennzeichnet, dass** das schalldämmende und/oder schwingungsisolierende Material ein elastisches Material ist.

14. Winkelverbinder nach einem der Ansprüche 1 bis 13, **dadurch gekennzeichnet, dass** die Zwischenschicht (5) und/oder die gegebenenfalls vorhandene Zusatzzwischenschicht (9) einen statischen Elastizitätsmodul zwischen 0,025 N/mm² und 5N/mm² aufweist (aufweisen).

15. Winkelverbinder nach einem der Ansprüche 1 bis 14, **dadurch gekennzeichnet, dass** die Zwischenschicht (5) und/oder die gegebenenfalls vorhandene Zusatzzwischenschicht (9) ein Elastomer aufweist (aufweisen).

16. Winkelverbinder nach einem der Ansprüche 1 bis 15, **dadurch gekennzeichnet, dass** die Zwischenschicht (5) und/oder die gegebenenfalls vorhandene Zusatzzwischenschicht (9) ein, vorzugsweise aufgeschäumtes, Polyurethan-Elastomer oder ein Kautschuk- Elastomer oder ein thermoplastisches Elastomer aufweist (aufweisen).

## Claims

1. Angle connector having at least two legs (1, 2), arranged at an angle to one another different from 0° and 180°, for fastening one component (3) to another component (4), wherein at least one intermediate layer (5) made from a sound-absorbing and/or vibration-insulating material is arranged on at least one of the legs (1) and on the side of the leg (1) opposite the intermediate layer (5) an additional intermediate layer (9) made from a sound-absorbing and/or vibration-insulating material is arranged in such a manner that fastening means (6) for fastening the leg (1) to the component (4) are connected to the leg (1) substantially exclusively via the additional intermediate layer (9) and the intermediate layer (5), and on the side of the additional intermediate layer (9) opposite the leg (1) there is arranged a supporting plate (10) by which supporting heads (11) of the fastening means (6) can be supported, and in the leg (1) there are provided fastening holes (7) for guiding fastening means (6) therethrough, **characterised in that** the additional intermediate layer (9) is arranged at least in the vicinity of the fastening holes (7).

2. Angle connector according to claim 1, **characterised in that** the sound-absorbing and/or vibration-insulating material is an elastic material.

3. Angle connector according to claim 1 or 2, **characterised in that** the legs (1, 2) are arranged substantially orthogonally to one another.

4. Angle connector according to one of claims 1 to 3, **characterised in that** the intermediate layer (5) is so configured, and so arranged on the leg (1), that when the leg (1) is fastened to the component (4), the leg (1) is in physical contact with the component (4) exclusively with interposition of the intermediate layer (5) and, where present, fastening means (6).

5. Angle connector according to one of claims 1 to 4, **characterised in that**, in at least one of the legs (1, 2), there are provided fastening holes (7) for guiding fastening means (6), preferably screws or nails, therethrough.

6. Angle connector according to claim 5, **characterised in that** the intermediate layer (5) is arranged at least in the vicinity of the fastening holes (7).

7. Angle connector according to one of claims 1 to 6, **characterised in that** the intermediate layer (5) is arranged on the entire side of the leg (1) facing the component (4) in the assembled position.

8. Angle connector according to one of claims 1 to 7, **characterised in that** the intermediate layer (5) is captively fastened, preferably adhesively bonded, to the leg (1).

9. Angle connector according to one of claims 1 to 8, **characterised in that** the legs (1, 2) are made from metal, preferably from steel.

10. Angle connector according to one of claims 1 to 9, **characterised in that** the intermediate layer (5) has a minimum thickness (8) of at least 0.4 cm, preferably of at least 0.6 cm.

11. Angle connector according to one of claims 1 to 10, **characterised in that** the fastening means (6) are screws or nails.

12. Angle connector according to one of claims 1 to 11, **characterised in that** the additional intermediate layer (9) is arranged on the side of the leg (1) opposite the entire side of the leg (1) facing the component (4) in the assembled position.

13. Angle connector according to one of claims 1 to 12, **characterised in that** the sound-absorbing and/or vibration-insulating material is an elastic material.

14. Angle connector according to one of claims 1 to 13, **characterised in that** the intermediate layer (5) and/or, where present, the additional intermediate layer (9) has (have) a static modulus of elasticity between 0.025 N/mm2 and 5 N/mm2.

15. Angle connector according to one of claims 1 to 14, **characterised in that** the intermediate layer (5) and/or, where present, the additional intermediate layer (9) comprises (comprise) an elastomer.

16. Angle connector according to one of claims 1 to 15, **characterised in that** the intermediate layer (5) and/or, where present, the additional intermediate layer (9) comprises (comprise) a, preferably foamed, polyurethane elastomer or a rubber elastomer or a thermoplastic elastomer.

## Revendications

1. Connecteur d'angle avec au moins deux ailes (1, 2) disposées l'une par rapport à l'autre sous un angle différent de 0° et de 180° pour la fixation d'un composant (3) à un autre composant (4), dans lequel au moins une couche intermédiaire (5) en un matériau insonorisant et/ou isolant contre les vibrations est disposée sur au moins une des ailes (1) et une couche intermédiaire supplémentaire (9) en un matériau insonorisant et/ou isolant contre les vibrations est disposée sur le côté de l'aile (1) opposé à la couche intermédiaire (5), d'une manière telle que des moyens de fixation (6) destinés à la fixation de l'aile (1) au composant (4) soient en liaison avec l'aile (1) essentiellement exclusivement via la couche intermédiaire supplémentaire (9) et la couche intermédiaire (5), et une plaque d'appui (10) est disposée sur le côté de la couche intermédiaire supplémentaire (9) opposé à l'aile (1), avec laquelle des têtes d'appui (11) des moyens de fixation (6) peuvent être soutenues et il est prévu dans l'aile (1) des trous de fixation (7) pour le passage de moyens de fixation (6), **caractérisé en ce que** la couche intermédiaire supplémentaire (9) est disposée au moins au voisinage des trous de fixation (7).

2. Connecteur d'angle selon la revendication 1, **caractérisé en ce que** le matériau insonorisant et/ou isolant contre les vibrations est un matériau élastique.

3. Connecteur d'angle selon la revendication 1 ou 2, **caractérisé en ce que** les ailes (1, 2) sont disposées essentiellement orthogonalement l'une à l'autre.

4. Connecteur d'angle selon l'une quelconque des revendications 1 à 3, **caractérisé en ce que** la couche intermédiaire (5) est réalisée et disposée sur l'aile (1) d'une manière telle que, lors de la fixation de l'aile (1) au composant (4), l'aile (1) soit en contact physique avec le composant (4) exclusivement avec interposition de la couche intermédiaire (5) et le cas échéant de moyens de fixation présents (6).

5. Connecteur d'angle selon l'une quelconque des revendications 1 à 4, **caractérisé en ce qu'**il est prévu dans au moins une des ailes (1, 2) des trous de fixation (7) pour le passage de moyens de fixation (6), de préférence des vis ou des clous.

6. Connecteur d'angle selon la revendication 5, **caractérisé en ce que** la couche intermédiaire (5) est disposée au moins au voisinage des trous de fixation (7).

7. Connecteur d'angle selon l'une quelconque des revendications 1 à 6, **caractérisé en ce que** la couche intermédiaire (5) est disposée sur la totalité du côté de l'aile (1) tourné vers le composant (4) dans la position de montage.

8. Connecteur d'angle selon l'une quelconque des revendications 1 à 7, **caractérisé en ce que** la couche intermédiaire (5) est fixée sur l'aile (1) de façon imperdable, de préférence collée.

9. Connecteur d'angle selon l'une quelconque des revendications 1 à 8, **caractérisé en ce que** les ailes (1, 2) sont fabriquées en métal, de préférence en acier.

10. Connecteur d'angle selon l'une quelconque des revendications 1 à 9, **caractérisé en ce que** la couche intermédiaire (5) présente une épaisseur minimale (8) d'au moins 0,4 cm, de préférence d'au moins 0,6 cm.

11. Connecteur d'angle selon l'une quelconque des revendications 1 à 10, **caractérisé en ce que** les moyens de fixation (6) sont des vis ou des clous.

12. Connecteur d'angle selon l'une quelconque des revendications 1 à 11, **caractérisé en ce que** la couche intermédiaire supplémentaire (9) est disposée sur le côté de l'aile (1) opposé à la totalité du côté de l'aile (1) tourné vers le composant (4) dans la position de montage.

13. Connecteur d'angle selon l'une quelconque des revendications 1 à 12, **caractérisé en ce que** le matériau insonorisant et/ou isolant contre les vibrations est un matériau élastique.

14. Connecteur d'angle selon l'une quelconque des revendications 1 à 13, **caractérisé en ce que** la couche intermédiaire (5) et/ou la couche intermédiaire supplémentaire éventuellement présente (9) présenLe/-présentent un module d'élasticité statique compris entre 0,025 N/mm² e= 5 N/mm².

15. Connecteur d'angle selon l'une quelconque des revendications 1 à 14, **caractérisé en ce que** la couche intermédiaire (5) et/ou la couche intermédiaire supplémentaire éventuellement présente (9) présente/- présentent un élastomère.

16. Connecteur d'angle selon l'une quelconque des revendications 1 à 15, **caractérisé en ce que** la couche intermédiaire (5) et/ou la couche intermédiaire supplémentaire éventuellement présente (9) présente/- présentent un élastomère de polyuréthane ou un élastomère de caoutchouc, de préférence expansé, ou un élastomère thermoplastique.
